**Europäisches Patentamt**

**European Patent Office**

**Office européen des brevets**

(19)

(11) **EP 1 705 822 A2**

(12) **EUROPEAN PATENT APPLICATION**

(43) Date of publication:
27.09.2006 Bulletin 2006/39

(51) Int Cl.:
*H04L 1/06* (2006.01)　　*H04L 27/26* (2006.01)

(21) Application number: 06005900.3

(22) Date of filing: 22.03.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: 22.03.2005 KR 2005023795

(71) Applicants:
- **Samsung Electronics Co., Ltd.**
**Suwon-si, Gyeonggi-Do (KR)**
- **Korea University Industry & Academy Collaboration Foundation Seongbuk-gu Seoul (KR)**

(72) Inventors:
- **Lee, Dong-Jun**
**c/oSamsung Electronics Co., Ltd.**
**Suwon-si,**
**Gyeonggi-do (KR)**

- **Ahn, Min-Young**
**c/oSamsung Electronics Co., Ltd.**
**Suwon-si**
**Gyeonggi-do (KR)**
- **Kim, Jong-Han**
**c/oSamsung Electronics Co., Ltd.**
**Suwon-si**
**Gyeonggi-do (KR)**
- **Lee, In-Kyu**
**Seocho-gu**
**Seoul (KR)**
- **Lee, Heun-Chul**
**Pocheon-si**
**Gyeonggi-do (KR)**

(74) Representative: **Grünecker, Kinkeldey, Stockmair & Schwanhäusser Anwaltssozietät Maximilianstrasse 58 80538 München (DE)**

(54) **Method and apparatus for detecting and decoding a signal in a MIMO communication system**

(57)　A method for detecting and decoding a signal in a communication system based on Multiple-Input Multiple-Output (MIMO)-Orthogonal Frequency Division Multiplexing (OFDM). A signal is received through multiple receive antennas. A decision error occurring at a symbol decision time is considered and a symbol is detected from transmitted symbols. Original data transmitted from the detected symbol is recovered. The performance of a coded bit system can be significantly improved using a new equalization matrix G considering a decision error.

FIG.2

EP 1 705 822 A2

**Description**

The present invention generally relates to a wireless communication system, and more particularly to a method and an apparatus for detecting and decoding a signal in a Multiple-Input Multiple-Output (MIMO) communication system.

A Multiple-Input Multiple-Output (MIMO) communication system transmits and receives data using multiple transmit antennas and multiple receive antennas. A MIMO channel formed by Nt transmit antennas and Nr receive antennas is divided into a plurality of independent spatial subchannels. Because the MIMO system employs multiple transmit/receive antennas, it outperforms a Single-Input Single-Output (SISO) antenna system in terms of channel capacity. Conventionally, the MIMO system undergoes frequency selective fading that causes Inter-Symbol Interference (ISI). The ISI causes each symbol within a received signal to distort other successive symbols. This distortion degrades the detection accuracy of a received symbol, and it is an important noise factor affecting a system designed to operate in a high Signal-to-Noise Ratio (SNR) environment. To remove the ISI, a stage at the receiving end has to perform an equalization process for a received signal. This equalization requires high processing complexity.

On the other hand, Vertical Bell Labs Layered Space-Time (V-BLAST) architecture, which is one of space division multiplexing schemes, offers an excellent tradeoff between performance and complexity. The V-BLAST scheme uses both linear and non-linear detection techniques. In other words, the V-BLAST scheme suppresses interference from a received signal before detection and removes interference using a detected signal.

When an Orthogonal Frequency Division Multiplexing (OFDM) scheme is used, an equalization process for the received signal is possible at low complexity. An OFDM system divides a system frequency band into a plurality of subchannels, modulates data of the subchannels, and transmits the modulated data. The subchannels undergo different frequency-selective fading according to transmission paths between transmit and receive antennas. The ISI incurred due to this fading phenomenon can be effectively is removed by prefixing each OFDM symbol with a cyclic prefix. Therefore, when the OFDM scheme is applied to the MIMO system, the ISI is not considered for all practical purposes.

For this reason, it is expected that the MIMO-OFDM system based on a detection algorithm of the V-BLAST scheme will be selected as a next-generation mobile communication system. However, the conventional V-BLAST scheme has a severe drawback. There is a performance degradation due to error propagation, which is inherent in a decision feedback process. Various methods are being studied and proposed to overcome this performance degradation. However, these methods create new problems, such as increased processing complexity of a receiving stage. This complexity increases according to a modulation level and the number of antennas. The currently proposed methods are based on iterative process between detection and decoding without significantly increasing the overall processing complexity.

Accordingly, the present invention has been designed to solve the above and other problems occurring in the prior art.

It is the object of the present invention to provide a method and an apparatus for detecting and decoding a signal that can improve the reliability of a received signal by detecting the signal while considering a decision error in an equalization process for the received signal.

This object is solved by the subject matter of the independent claims.

Preferred embodiments are defined in the dependent claims.

It is an aspect of the present invention to provide a method for detecting and decoding a signal that can improve system performance by optimizing a signal detection order for channel-by-channel layers.

It is another aspect of the present invention to provide a method for detecting and decoding a signal that can reduce complexity by setting a signal detection order for one channel and applying the set signal detection order to all channels.

In accordance with an aspect of the present invention, there is provided a method for detecting and decoding a signal in a communication system based on MIMO-OFDM, including the steps of receiving a signal through multiple receive antennas; considering a decision error occurring at a symbol decision time and detecting a symbol from the received signal; and recovering original data transmitted from the detected symbol.

In accordance with a further aspect of the present invention, there is provided a corresponding apparatus that is adapted to operate according to the above method.

Preferably, the symbol is detected using a Minimum Mean Square Error (MMSE)-based equalization matrix. The equalization matrix is expressed by

$$\text{Equation (1):} \quad G = H_i^* (H_i H_i^* + \frac{1}{\sigma_s^2} \hat{H}_{i-1} Q_{e_{i-1}} \hat{H}_{i-1}^* + \alpha I_M)^{-1}, \dots\dots\dots\dots\dots\dots\dots (1)$$

where H, is a channel matrix for an i -th signal, * is a complex conjugate, e is an estimation error, $Q_e$ is a decision error covariance matrix of e,

$$\alpha = \frac{\sigma_n^2}{\sigma_s^2},$$

and I is an identity matrix.

The equalization matrix is designed such that a mean square value of the error $e = x_i - Gy_i$, is minimized.

The decision error covariance matrix $Q_e$ is computed by Equation (2):

$$Q_e = \begin{bmatrix} E[\|e_1\|^2|\hat{x}_1] & \cdots & E[e_1 e_{i-1}^*|\hat{x}_1, \hat{x}_{i-1}] \\ \vdots & \ddots & \vdots \\ E[e_{i-1}e_1^*|\hat{x}_{i-1}, \hat{x}_1] & \cdots & E[\|e_{i-1}\|^2|\hat{x}_{i-1}] \end{bmatrix}, \dots\dots\dots (2)$$

where $E[e_m e_n^*|\hat{x}_m, \hat{x}_n]$ corresponding to a conditional expectation value indicates that errors $e_m$ and $e_n$ occur due to inaccurate decisions associated with $\hat{x}_m \neq x_m$ and $\hat{x}_m \neq x_n$.

Diagonal elements $E[\|e_m|^2|\hat{x}_m]$ of the decision error covariance matrix $Q_e$ indicate a mean square error value of the detected symbol.

Diagonal elements $E[\|e_m\|^2|\hat{x}_m]$ of the decision error covariance matrix $Q_e$ are values considering variance of a decision error $e_m$ due to an inaccurate decision associated with $\hat{x}_m$.

A position of a component with a smallest value among diagonal elements of the decision error covariance matrix $Q_e$ determines a signal detection order.

The step of detecting the symbol includes the steps of estimating a previously transmitted symbol using decoded original data in a previous decoding process; and

removing a component of the estimated symbol from the received signal.

The step of detecting the symbol includes the step of setting a detection order for layers in which signals are received through an identical subchannel.

The detection order for the layers is set in descending order from a layer with a highest channel capacity.

The channel capacity is computed by Equation (3):

$$C_n = \sum_{k=1}^{N_c} C_{nk} \quad for \ \ n = 1, \dots, N, \dots\dots\dots\dots (3)$$

where $C_{nk}$ is defined as channel capacity for an $n$-th layer in a $k$-th subchannel, $C_{nk}$ being computed by Equation (4):

$$C_{nk} = \log_2(1 + SINR_{nk}) \dots\dots\dots\dots (4)$$

The detection order is set in ascending order from a layer in which a metric $M_n$ for the $n$-th layer is smallest.

The metric $M_n$ is computed by Equation (5):

$$M_n = \prod_{k=1}^{N_c} \left[ \left( (\rho/N)\overline{H}_k^* H_k + I_N \right)^{-1} \right]_{m} \quad for \ \ n = 1, \dots, N, \dots\dots\dots\dots (5)$$

where H is a channel matrix, $p$ is a mean received power to noise ratio in each receive antenna, and $I$ is an identity matrix.

The detection order among layers is determined only for one particular subchannel, and the same order is applied to all subchannels.

The present invention will be more clearly understood from the following detailed description taken in conjunction with the accompanying drawings, in which:

FIG 1 illustrates a structure of a transmitter of a coded layered space-time OFDM system to which a signal detection and decoding method of the present invention is applied;

FIG 2 illustrates a structure of a receiver of the coded layered space-time OFDM system to which the signal detection and decoding method of the present invention is applied in accordance with a first embodiment of the present invention;

FIG. 3 is a 16-Quadrature Amplitude Modulation (16QAM) constellation illustrating a conditional probability used in the signal detection and decoding method of the present invention;

FIG 4 illustrates a structure of a receiver of the coded layered space-time OFDM system to which the signal detection and decoding method is applied in accordance with a second embodiment of the present invention;

FIG 5 illustrates performance comparison results between the signal detection and decoding method of the present invention and the conventional V-BLAST method when 16QAM is applied in terms of a frame error; and

FIG 6 illustrates performance comparison results between the signal detection and decoding method of the present invention and the conventional V-BLAST method when 64QAM is applied in terms of a frame error.

The present invention will be described in detail herein below with reference to the accompanying drawings.

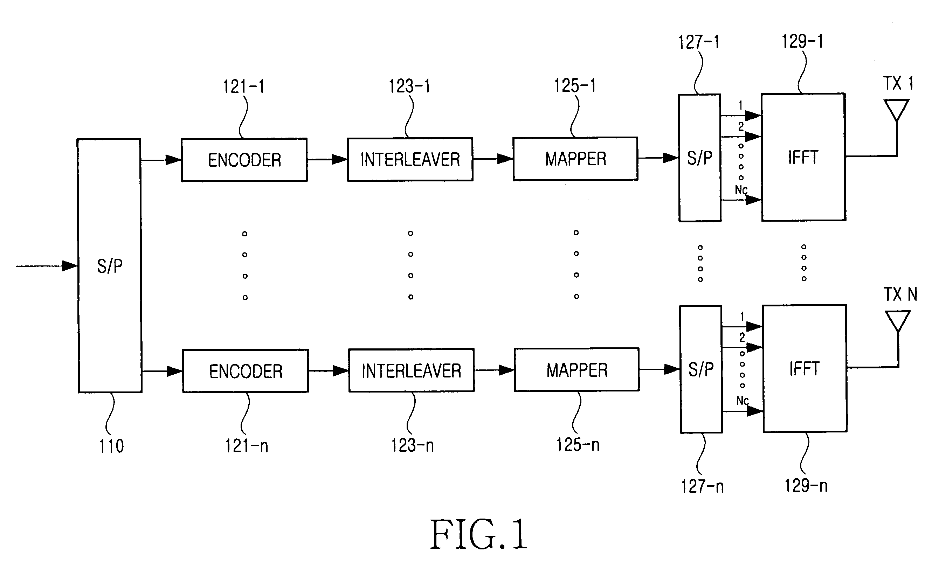

FIG 1 illustrates a structure of a transmitter of a coded layered space-time OFDM system to which a signal detection and decoding method of the present invention is applied.

In FIG 1, the OFDM transmitter is provided with a first Serial-to-Parallel (S/P) converter 110 for converting an input bit stream to a plurality of parallel signal streams and signal processing units associated with the signal streams output from the first S/P converter 110. The signal processing units are configured by encoders 121-1~ 121-n for encoding the signal streams, interleavers 123-1 ~ 123-n for interleaving signals output from the encoders 121, bit/symbol mappers 125-1 ~ 125-n for performing bit/symbol mapping processes for signals output from the interleavers 123, second S/P converters 127-1 ~ 127-n for converting symbol streams output from the bit/symbol mappers 125 to a plurality of parallel symbol streams, and Inverse Fast Fourier Transform (IFFT) processors 129-1 ~ 129-n for performing IFFT processes for the parallel symbol streams output from the second S/P converters 127 to transmit signals through $N_T$ transmit antennas, TX 1~TX N.

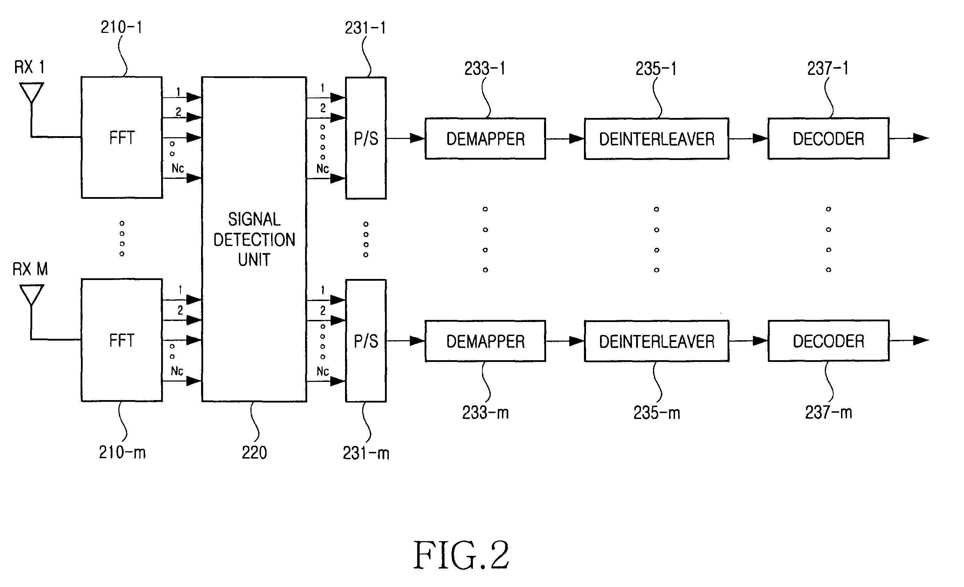

FIG 2 illustrates a structure of a receiver of the coded layered space-time OFDM system to which the signal detection and decoding method of the present invention is applied in accordance with a first embodiment of the present invention.

In FIG. 2, the OFDM receiver is provided with Fast Fourier Transform (FFT) processors 210-1 ~ 210-m for performing FFT processes for signals received through $M_R$ receive antennas RX 1~ RX M, a signal detection unit 220 for processing parallel signals output from the FFT processors 210-1 ~ 210-m and outputting parallel signal streams associated with the FFT processors 210-1 ~ 210-m, and signal processing units for processing the parallel signal streams output from the signal detection unit 220 according to signals associated with the FFT processors 210-1 ~ 210-m. The signal processing units are configured by Parallel-to-Serial (P/S) converters 231-1 ~ 231-m for converting the parallel signals associated with the FFT processors 210-1 ~ 210-m to serial symbol streams, demappers 233-1 ~ 233-m for demapping the symbol streams output from the P/S converters 231 and outputting signal streams, deinterleavers 235-1 ~ 235-m for deinterleaving the signal streams output from the demappers 233, and decoders 237-1 ~ 237-m for decoding signals output from the deinterleavers 235 and outputting original data.

In the present invention, it is assumed that channel state information (CSI) is predetermined for the receiver. The present invention considers a baseband signal model based on a zero-mean complex value and a discrete-time frequency selective fading MIMO-OFDM channel model.

When an N-dimensional complex transmission signal vector and an N-dimensional complex reception signal vector are defined by $x_k$ and $y_k$, a signal received through the k-th subcarrier is expressed by Equation (6):

$$\mathbf{y}_k = \overline{\mathbf{H}}_k \mathbf{x}_k + \mathbf{n}_k \quad \text{.........................................................................} (6)$$

where

$$\overline{\mathbf{H}}_k = \begin{bmatrix} h_{11,k} & \cdots & h_{1N,k} \\ \vdots & \ddots & \vdots \\ h_{M1,k} & \cdots & h_{MN,k} \end{bmatrix}$$

and

$$\mathbf{n}_k = \begin{bmatrix} n_1 \\ \vdots \\ n_{M,k} \end{bmatrix}$$

Assuming that total power of $x_k$ for obtaining the maximum capacity is P and a transmitter does not know a channel state, transmission signal power must be equally distributed between N transmit antennas according to variance $\sigma_s^2$. A covariance matrix of $x_k$ is defined by Equation (7):

$$\mathbf{E}[\mathbf{x}_k \mathbf{x}_k^\dagger] = \sigma_s^2 \mathbf{I}_N = \frac{P}{N} \mathbf{I}_N, \dots\dots\dots\dots\dots\dots\dots\dots\dots\dots\dots\dots\dots\dots\dots\dots\dots (7)$$

where $\mathbf{E}[\cdot]$ and $(\cdot)^\dagger$ denote an expectation value and a complex conjugate transpose matrix, respectively, $\mathbf{I}_N$ is an identity matrix of a size N the additional term of $\mathbf{n}_k$ has variance $\sigma_n^2$, and is complex Gaussian noise of an independent and identical distribution.

A channel coefficient $h_{ji,k}$ of $\overline{\mathbf{H}}_k$ denotes a path gain from the $i$-th transmit antenna to the j-th receive antenna. The path gain is modeled as a sample of independent complex Gaussian random parameters having the variance of 0.5 on a dimension-by-dimension basis. If antennas of each stage on a communication link are divided according to more than a half wavelength, independent paths are maintained.

A signal model of a layered space-time OFDM system considering error propagation is newly introduced into the present invention.

Transmission symbols are defined by $x_n$ representing a symbol transmitted from the $n$-th antenna and $\mathbf{x} = [x_1\ x_2 \cdots x_N]$ representing a vector signal with $(\cdot)^T$ representing the transpose of a vector. For convenience, the decision order $\{\hat{x}_1 \hat{x}_2 \cdots \hat{x}_{i-1}\}$ is designated by an optimum detection order of the V-BLAST scheme proposed by Foschini.

$\hat{x}_n$ denotes a symbol detected for Layer n, and $\mathbf{h}_n$ denotes the $n$-th row of $\overline{\mathbf{H}}$.

$$\mathbf{x}_i = [x_i\ x_{i+1} \dots x_N]^T, \quad \mathbf{H}_i = [h_i\ h_{i+1} \dots h_N], \quad \hat{\mathbf{x}}_{i-1} = [\hat{x}_1\ \hat{x}_2 \dots \hat{x}_{i-1}]^T, \quad \text{and} \quad \hat{\mathbf{H}}_{i-1} = [h_1\ h_2 \dots h_{i-1}].$$

In the conventional V-BLAST algorithm, a symbol vector $\hat{\mathbf{x}}_{i-1}$ pre-detected until the ($i$ - 1)-th step is removed from a vector signal received in the $i$-th step. As a result, a corrected received vector $\mathbf{y}_i$ can be expressed by Equation (8):

$$\begin{aligned} \mathbf{y}_i &= \mathbf{y} - \hat{\mathbf{H}}_{i-1} \hat{\mathbf{x}}_{i-1} \\ &= \mathbf{H}_i \mathbf{x}_i + \mathbf{n} \end{aligned} \dots\dots\dots\dots\dots\dots\dots\dots\dots\dots\dots\dots\dots\dots\dots\dots\dots (8)$$

In Equation (8), it is assumed that the previous decisions are correct (i.e., $\hat{x}_n = x_n$ for $n=1,2, \cdots, i$-1). This signal detection process regards undetected signals $\{x_i, x_{i+2}, ..., x_N\}$ as interference, and is performed using a linear nulling process as in a Minimum Mean Square Error (MMSE) scheme. Equation (8) requires the accuracy of the pre-detected vector symbol $\hat{x}_{i-1}$. In a situation in which a decision error is present, Equation (8) is rewritten as Equation (9):

$$\mathbf{y}_i = \sum_{j=i}^{N} \mathbf{h}_j x_j + \sum_{j=1}^{i-1} \mathbf{h}_j (x_j - \hat{x}_j) + \mathbf{n}$$
$$= \mathbf{H}_i \mathbf{x}_i + \hat{\mathbf{H}}_{i-1} \hat{\mathbf{e}}_{i-1} + \mathbf{n} \qquad , \ldots\ldots\ldots\ldots\ldots\ldots\ldots\ldots\ldots\ldots\ldots\ldots\ldots\ldots \text{(9)}$$

where $\hat{\mathbf{e}}_{i-1} = [e_1 e_2 ... e_{i-1}]^T$ and $e_n = x_n - \hat{x}_n$.

Next, an MMSE algorithm based on a new signal model of Equation (9) will be described.

The present invention uses a nulling matrix based on an MMSE criterion considering a decision error. In the MMSE criterion, an equalization matrix **G** is designed such that a meansquare value of an error $\mathbf{e} = \mathbf{x}_i - \mathbf{G}\mathbf{y}_i$ is minimized, and can be obtained using the well-known orthogonality principle in mean-square estimation as in Equation (10):

$$E[\mathbf{e}\mathbf{y}_i^{\dagger}] = E[(\mathbf{x}_i - \mathbf{G}\mathbf{y}_i)\mathbf{y}_i^{\dagger}] = 0 \ldots\ldots\ldots\ldots\ldots\ldots\ldots\ldots\ldots\ldots\ldots\ldots \text{(10)}$$

The equalization matrix **G** satisfies Equation (11).

$$E[(\mathbf{x}_i - \mathbf{G}\mathbf{y}_i)\mathbf{y}_i^{\dagger}] = \mathbf{Q}_{x_i y_i} - \mathbf{G}\mathbf{Q}_{y_i} = 0 \quad , \ldots\ldots\ldots\ldots\ldots\ldots\ldots\ldots\ldots\ldots \text{(11)}$$

where a covariance matrix is defined by $\mathbf{Q}_{AB} = E[\mathbf{A}\mathbf{B}^{\dagger}]$ and $\mathbf{Q}_A = E[\mathbf{A}\mathbf{A}^{\dagger}]$.

$$\alpha = \frac{\sigma_n^2}{\sigma_s^2}$$

and **G** can be expressed from Equation (9) and Equation (11) as Equation (12):

$$\mathbf{G} = \mathbf{Q}_{x_i y_i} \mathbf{Q}_{y_i}^{-1}$$
$$= \mathbf{H}_i^{\dagger} (\mathbf{H}_i \mathbf{H}_i^{\dagger} + \frac{1}{\sigma_s^2} \hat{\mathbf{H}}_{i-1} \mathbf{Q}_{e_{i-1}} \hat{\mathbf{H}}_{i-1}^{\dagger} + \alpha \mathbf{I}_M)^{-1} \quad , \ldots\ldots\ldots\ldots\ldots\ldots\ldots\ldots\ldots \text{(12)}$$

where

$$\mathbf{Q}_{x_i} = \sigma_s^2 \mathbf{I}_{N-i+1} \quad \text{and} \quad \mathbf{Q}_n = \sigma_s^2 \mathbf{I}_M .$$

Therefore, a decision error variance matrix $\mathbf{Q}_{e_{i-1}}$ of the dimension (i-1) can be defined as Equation (13):

$$\mathbf{Q}_{\hat{e}_{i-1}} = \begin{bmatrix} E[\|e_1\|^2 | \hat{x}_1] & \cdots & E[e_1 e_{i-1}^* | \hat{x}_1, \hat{x}_{i-1}] \\ \vdots & \ddots & \vdots \\ E[e_{i-1} e_1^* | \hat{x}_{i-1}, \hat{x}_1] & \cdots & E[\|e_{i-1}\|^2 | \hat{x}_{i-1}] \end{bmatrix}, \dots\dots\dots\dots\dots\dots\dots (13)$$

where * denotes the complex conjugate and a conditional expectation value $E[e_m e_n^* | \hat{x}_m, \hat{x}_n]$ is used to indicate that errors $e_m$ and $e_n$ occur due to inaccurate decisions associated with $\hat{x}_m \neq x_m$ and $\hat{x}_n \neq x_n$, respectively.

For example, diagonal elements $E[e_m e_n^* | \hat{x}_m, \hat{x}_n]$ indicate the variance of the decision error $e_m$ due to the inaccurate decision associated with $\hat{x}_m$. Because non-diagonal elements $E[e_m e_n^* | \hat{x}_m, \hat{x}_n]$ do not have a correlation between errors where $m \neq n$, $E[e_m e_n^* | \hat{x}_m, \hat{x}_n]$ is the same as $E[e_m | \hat{x}_m] E[e_n^* | \hat{x}_n]$.

When it is assumed that previously detected signals are perfect and error propagation does not occur, the equalization matrix **G** proposed in the present invention is equal to the conventional MMSE matrix. In other words, $\mathbf{Q}_{\hat{e}_{i-1}} = 0$.

Next, a method for deciding an optimum detection order on the basis of a new equalization matrix **G** in accordance with the present invention will be described.

A covariance matrix **Q**, of an estimation error **e = x$_i$ - Gy$_i$** can be computed after the equalization matrix **G** is set. Using Equation (12), the covariance matrix **Q$_e$** is expressed by Equation (14):

$$\begin{aligned} \mathbf{Q}_e &= \mathbf{Q}_{x_i} - \mathbf{Q}_{x_i y_i} \mathbf{G}^\dagger - \mathbf{G} \mathbf{Q}_{y_i x_i} + \mathbf{G} \mathbf{Q}_{y_i} \mathbf{G}^\dagger \\ &= \sigma_s^2 (\mathbf{I}_{N-i+1} - \mathbf{G} \mathbf{H}_i) \end{aligned} \quad \dots\dots\dots\dots\dots\dots\dots\dots\dots (14)$$

Diagonal elements indicate mean square error (MSE) values of detected symbols. Therefore, the successive detection order depends on a position of the smallest diagonal element of **Q.** This is equal to a position of the largest diagonal element **GH$_t$** of Equation (14).

Next, the operation of a demapper applied for the signal detection and decoding method of the present invention will be described.

It is well known that the use of a soft output demapper and a soft input channel decoder significantly improves system performance. First, an optimum soft bit metric considering a detection error is computed after several assumptions are made in a detected vector signal $\hat{\mathbf{x}}_{i-1}$.

The index **t** denotes the position on the main diagonal of the matrix **Q$_e$** where the MSE is minimized. In other words, $\hat{x}_t$ is selected as a decision at the $i$-th step where $i \leq t \leq N$. $g_t$ is defined as the row of the equalization matrix **G** associated with an equalizer for $\hat{x}_t$. Applying this equalizer vector into Equation(4) yields Equation (15):

$$\begin{aligned} \tilde{z}_t &= g_t \mathbf{H}_i \mathbf{x}_i + g_t \hat{\mathbf{H}}_{i-1} \hat{\mathbf{e}}_{i-1} + g_t \mathbf{n} \\ &= g_t \mathbf{h}_t x_t + \sum_{\substack{j=i \\ j \neq t}}^{N} g_j \mathbf{h}_j x_j + g_t \hat{\mathbf{H}}_{i-1} \hat{\mathbf{e}}_{i-1} + g_t \mathbf{n}, \quad \dots\dots\dots\dots\dots\dots\dots\dots (15) \\ &= \beta x_t + w \end{aligned}$$

where

$$\beta = g_t \mathbf{h}_t \ \text{ and } \ w = \sum_{\substack{j=i \\ j \neq t}}^{N} g_j \mathbf{h}_j x_j + g_t \hat{\mathbf{H}}_{i-1} \hat{\mathbf{e}}_{i-1} + g_t \mathbf{n} .$$

For analytical convenience, it is assumed that the terms of w follow a complex Gaussian distribution. An error probability of an MMSE detector can be easily assessed under an assumption that output interference and noise are Gaussian noise.

Since each term in w is independent of other terms, the variance of $w$ can be computed by Equation (16):

$$\sigma_w^2 = \sum_{\substack{j=i \\ j \neq t}}^{N} \left\| g_t h_j \right\|^2 E[\left\| x_j \right\|^2] + \sum_{j=1}^{i-1} \left\| g_t h_j \right\|^2 E[\left\| e_j \right\|^2 | \hat{x}_j] + E[g_t nn^\dagger g_t^\dagger]$$

$$\quad\quad\quad\quad\quad\quad\quad\quad\quad\quad\quad\quad\quad \dots\dots\dots\dots\dots\dots (16)$$

$$= \sum_{\substack{j=i \\ j \neq t}}^{N} \left\| g_t h_j \right\|^2 \sigma_s^2 + \sum_{j=1}^{i-1} \left\| g_t h_j \right\|^2 E[\left\| e_j \right\|^2 | \hat{x}_j] + \sigma_n^2 \left\| g_t \right\|^2$$

In Equation (16), the second term corresponds to the decision error up to the ($i$-1)-th step, and it affects system performance significantly. After a biased term is properly scaled, the input to the unbiased demapper can be written as Equation (17):

$$\widetilde{x}_t = \widetilde{z}_t / \beta = x_t + v \quad , \dots\dots\dots\dots\dots\dots\dots\dots\dots\dots\dots\dots\dots\dots\dots\dots\dots\dots\dots (17)$$

where v is complex noise with the variance $\sigma_v^2 = \sigma_w^2 / \left\| \beta \right\|^2$ .

Next, the computation of a Log Likelihood Ratio (LLR) for soft bit information will be briefly described.

Let $S$ and $s$ be a set of constellation symbols and an element of the set $S$, respectively. Then the conditional probability density function (pdf) of $\widetilde{x}_t$ in Equation (17) is given by Equation (18):

$$p(\widetilde{x}_t | x_t = s) = \frac{1}{\pi \sigma_v^2} \exp\left( -\frac{\left\| \widetilde{x}_t - s \right\|^2}{\sigma_v^2} \right) \dots\dots\dots\dots\dots\dots\dots\dots\dots\dots\dots\dots\dots\dots\dots (18)$$

When the $i$-th bit of $x_t$, is defined as $b_t^i$ and two mutually exclusive subsets are defined as $S_0^i = \left\{ s : b_t^i = 0 \right\}$

and $S_1^i = \left\{ s : b_t^i = 1 \right\}$ where $i$ = 1,2 ... $\log_2 M_e$ and M, is defined as the constellation magnitude $|S|$, a posteriori LLR of $b_t^i$ can be defined as Equation (19):

$$LLR(b_t^i) \underset{=}{\Delta} \log \frac{P[b_t^i = 0 | \tilde{x}_t]}{P[b_t^i = 1 | \tilde{x}_t]}$$

$$= \log \frac{\sum_{s \in S_0^i} P[x_t = s | \tilde{x}_t]}{\sum_{s \in S_1^i} P[x_t = s | \tilde{x}_t]} \quad \text{..............................................................} \quad (19)$$

Equation (19) can be rewritten through slight manipulation as shown in Equation (20):

$$LLR(b_t^i) = \log \frac{\sum_{s \in S_0^i} \exp\left(-\frac{\|\tilde{x}_t - s\|^2}{\sigma_v^2}\right)}{\sum_{s \in S_1^i} \exp\left(-\frac{\|\tilde{x}_t - s\|^2}{\sigma_v^2}\right)} \quad \text{...................................................} \quad (20)$$

In order to compute $\sigma_v^2$, $E[\|e_j\|^2 | x_{\cdot j}]$ must be computed for $j = 1,2,\cdots,i-1$ in Equation (16) and these quantities are related to the probability of decision error at the $j$-th step..

Next, a method for computing the error probability will be described.

The error probability associated with a Maximum Likelihood (ML) demapper is invariant to any rotation of a signal constellation. This means that the error probability depends on only a relative distance between signal points within the signal constellation. Let us define $P_e$ as the error probability between two neighboring QAM signal points. Also, the minimum distance of the $M_c$ - QAM constellation is given by Equation (21):

$$d_{\min} = \sqrt{\frac{6\sigma_s^2}{M_c - 1}} \quad \text{.......................................................................................} \quad (21)$$

The error probability $P_e$ between two signals separated by the minimum distance $d_{\min}$ is computed by Equation (22):

$$P_e = Q\left(\frac{d_{\min}}{2\sigma}\right), \quad \text{.....................................................................................} \quad (22)$$

where

$$Q(x) = \int_x^\infty \frac{1}{\sqrt{2\pi}} \exp(-\frac{u^2}{2}) du$$

and $\sigma^2$ corresponds to the noise variation in an in-phase or 4-quadrature phase direction. Plugging $d_{\min}$ into Equation (22) yields Equation (23):

$$P_e = Q\left(\sqrt{\frac{6\sigma_s^2}{(M_c - 1)4\sigma^2}}\right)$$

$$= Q\left(\sqrt{\frac{3\sigma_s^2}{(M_c - 1)\sigma_v^2}}\right) \quad \ldots\ldots\ldots\ldots\ldots\ldots\ldots\ldots\ldots\ldots\ldots\ldots\ldots\ldots\ldots\ldots\ldots\ldots\ldots (23)$$

where the fact that $\sigma^2$ is a half the noise variance $\sigma_v^2$ for the QAM symbols is utilized.

An accurate approximate value of the Q function has been found over the range of $0 < \hat{x} < \infty$ as Equation (24):

$$Q(x) \simeq \frac{1}{\sqrt{2\pi}} \frac{\exp\left(-\frac{x^2}{2}\right)}{[(1-a)x + a\sqrt{x^2 + b}]} , \quad \ldots\ldots\ldots\ldots\ldots\ldots\ldots\ldots\ldots\ldots\ldots\ldots\ldots (24)$$

where $a = 0.344$ and $b = 5.334$.

This error function is used to estimate conditional expectation values $E[e_t | \hat{x}_t]$ and $E[\|e_t\|^2 | \hat{x}_t]$.

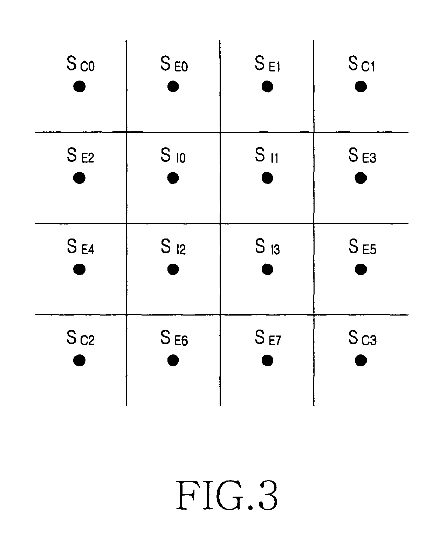

FIG 3 is a 16-Quadrature Amplitude Modulation (16QAM) constellation used to illustrate a conditional probability calculation in the signal detection and decoding method of the present invention.

In FIG. 3, 16 signal points are classified into three categories: *corner points* ($S_{C0}$, $S_{C1}$, $S_{C2}$, and $S_{C3}$), *edge points* ($S_{E0}$, $S_{E1}$, $S_{E2}$ $S_{E3}$, $S_{E4}$, $S_{E5}$, $S_{E6}$, and $S_{E7}$), and *inner points* ($S_{I0}$, $S_{I1}$, $S_{I2}$, and $S_{I3}$).

A process for computing $E[\|e_t\|^2 | \hat{x}_t]$ and $E[\|e_t\|^2 | \hat{x}_t]$ values using Equation (23) is described with reference to a conditional probability mass function $P(s | \hat{x}_t)$. The conditional probability mass function $P(s | \hat{x}_t)$ depends on a hard decision value $\hat{x}_t$. It is only required to consider the following three cases in order to cover all the possible outcomes of $\hat{x}_t$:

When $\hat{x}_t$ belongs to the set of corner points, the conditional probability $P(s | \hat{x}_t)$ of erroneous detection into each neighbor signal point is shown in Table 1.

**Table 1**

| S | $S_{C0}$, | $S_{E0}$, $S_{E2}$ | $S_{I0}$ |
|---|---|---|---|
| $P(s | \hat{x}_t)$ | $(1 - Q)^2$ | $Q - Q^2$ | $Q^2$ |

When $\hat{x}_t$ belongs to the set of edge points, the conditional probability $P(s | \hat{x}_t)$ of erroneous detection into each neighbor signal point is shown in Table 2.

**Table 2**

| S | $S_{E0}$ | $S_{C0}$, $S_{E1}$ | $S_{E2}$, $S_{I1}$ | $S_{I0}$ |
|---|---|---|---|---|
| $P(s | \hat{x}_t)$ | $(1 - Q)(1 - 2Q)$ | $Q - Q^2$ | $Q^2$ | $Q - 2Q^2$ |

When $\hat{x}_t$ belongs to the set of inner points, the conditional probability $P(s | \hat{x}_t)$ of erroneous detection into each neighbor signal point is shown in Table 3.

**Table 3**

| S | $S_{I0}$ | $S_{C0}$, $S_{E1}$, $S_{E4}$, $S_{I3}$ | $S_{E0}$, $S_{E2}$ , $S_{I1}$, $S_{I2}$ |
|---|---|---|---|
| $P(s | \hat{x}_t)$ | $(1 - 2Q)^2$ | $Q^2$ | $Q - 2Q^2$ |

Here,

$$Q = Q\left(\sqrt{\frac{3\sigma_t^2}{(M_c - 1)\sigma_v^2}}\right).$$

Note that $Q^2$ term is negligible. In that case, only the closest neighbors are included.

Assuming that transmitted signals are equally likely, the conditional probability $P(s|\hat{x}_t)$ that $s$ is transmitted when the detected signal is $\hat{x}_t$ falls into one of 3 categories described above.

When only an error between two adjacent constellation signal points is considered, the conditional expectation values $E[e_t|\hat{x}_t]$, and $E[\|e_t\|^2|\hat{x}_t]$ are computed by Equation (25) and Equation (26), respectively:

$$E[e_t|\hat{x}_t] = \sum_{s \in N_{\hat{x}_t}} (s - \hat{x}_t)P(s|\hat{x}_t) \qquad \text{and} \quad \ldots\ldots\ldots\ldots\ldots\ldots\ldots\ldots\ldots\ldots\ldots\ldots\ (25)$$

$$E[\|e_t\|^2|\hat{x}_t] = \sum_{s \in N_{\hat{x}_t}} (s - \hat{x}_t)P(s|\hat{x}_t) \ \ldots\ldots\ldots\ldots\ldots\ldots\ldots\ldots\ldots\ldots\ldots\ldots\ldots\ldots\ (26)$$

where the set $N_{\hat{x}_t}$ consists of neighboring constellation signal points surrounding the hard decision signal point $\hat{x}_t$. When the $E[e_t|\hat{x}_t]$ and $E[\|e_t\|^2|\hat{x}_t]$ values are computed, the noise variance $\sigma_w^2$ of Equation (16) can be obtained and the covariance matrix $\mathbf{Q}_{\hat{e}_j}$ for the $(i + 1)$ -th step can be obtained from Equation (13).

In the signal detection and decoding method as described above, the complexity increases due to a process for computing the equalization matrix G In the present invention the complexity $O(NM^3)$ is lower than $O(N^3) + O((N - 1)^3) + \cdots + O(2^3)$ in the conventional method.

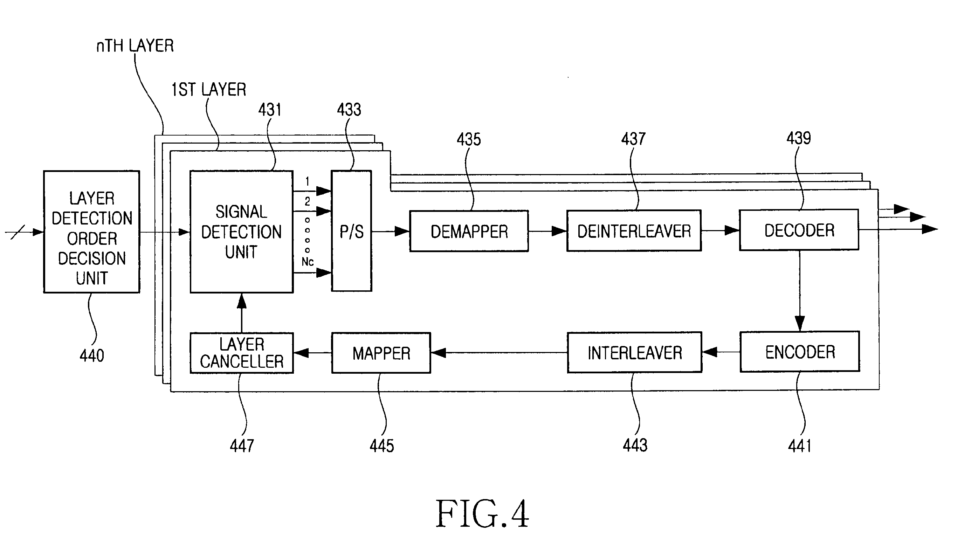

FIG 4 illustrates a structure of a receiver of the coded layered space-time OFDM system to which the signal detection and decoding method is applied in accordance with a second embodiment of the present invention.

In FIG 4, an FFT processor (not illustrated), a signal detection unit 431, a P/S converter 433, a demapper 435, a deinterleaver 437, and a decoder 439 in the receiver in accordance with the second embodiment of the present invention have the same structures as those in the receiver of the first embodiment. The receiver of the second embodiment further includes a representative layer order decision unit 440 for deciding the layer order for an identical subchannel in output signals of the FFT processors and outputting a signal to the signal detection unit 431 in the decided order. The receiver of the second embodiment further includes a second encoder 441 for encoding an output signal of the decoder 439 through the same encoding scheme as that of an associated transmitter, a second interleaver 443 for interleaving an output signal of the second encoder 441, a bit/symbol mapper 445 for performing a bit/symbol mapping process for the interleaved signal from the second interleaver 443, and a layer canceller 447 for removing a component of an associated symbol when the next repeated signal is detected in the signal detection unit 431 using symbol information generated by the bit/symbol mapper 445.

When an interference cancellation method is applied, the performance of an overall system is affected by the order in which each layer is detected. It is very efficient that interference is removed using decision feedback information estimated from a decoder's output signal of the previous step in flat fading channels. In other words, all decision values for the detected layer are transferred to the decoder when one layer is detected, and an output of the decoder is again encoded and is used for interference cancellation in the next layer.

Accordingly, all decision values detected in one layer must be transferred to the decoder in every detection step.

In accordance with the second embodiment of the present invention, the receiver decides the detection order for a total layer according to one computation during a total detection process before the interference cancellation is performed and applies the same detection order to all subchannels.

In accordance with the second embodiment of the present invention, a decision element for deciding the detection order uses a channel capacity value.

$C_{nk}$ denotes Shannon capacity associated with i-th subchannel in n-th layer and it is computed by Equation (27):

$$C_{nk} = \log_2(1 + SINR_{nk}), \dots\dots\dots\dots\dots\dots\dots\dots\dots\dots\dots\dots\dots\dots\dots (27)$$

where for an unbiased MMSE filtering, $SINR_{nk}$ can be expressed as Equation (28):

$$SINR_{nk} = \frac{\sigma_s^2}{\sigma_{MMSE-LE,nk}^2} - 1, \dots\dots\dots\dots\dots\dots\dots\dots\dots\dots\dots\dots\dots\dots (28)$$

where $\sigma_{MMSE-LE,nk}^2$ is an MMSE for the $n$-th layer in the $k$-th subchannel. When Equation (12) is replaced by Equation (14), $\sigma_{MMSE-LE,nk}^2$ is expressed by Equation (29):

$$\sigma_{MMSE-LE,nk}^2 = [\sigma_s^2 I_N - \sigma_s^2 \overline{H}_m]_{nn}$$
$$= \left[\sigma_s^2 I_N - \sigma_s^2 \overline{H}_k^* (\overline{H}_k \overline{H}_k^* + \alpha I_M)^{-1} \overline{H}_m\right] \dots\dots\dots\dots\dots\dots\dots\dots\dots (29)$$

Here, $[A]_{ij}$ is the $(i,j)$ element of a matrix A. In this case, the terms associated with decision errors are set to 0 (i.e., $Q_{\hat{e}_{i-1}}=0$).
Using the ABC lemma for matrix conversion, i.e., $(A + BC)^{-1} = A^{-1}-A^{-1}B(CA^{-1}B + I)^{-1}CA^{-1}$, Equation (29) can be rewritten as Equation (30):

$$\sigma_{MMSE-LE,nk}^2 = \left[\sigma_n^2 (\overline{H}_m^* \overline{H}_m + \alpha I_N)^{-1}\right]_{nn} \dots\dots\dots\dots\dots\dots\dots\dots\dots\dots\dots\dots (30)$$

When Equation (28) and Equation (30) are inserted into Equation (27), the capacity $C_{nk}$ is computed by Equation (31):

$$C_{nk} = -\log_2\left(\left[\left((\rho/N)\overline{H}_k^* H_k + I_N\right)^{-1}\right]_{nn}\right) \dots\dots\dots\dots\dots\dots\dots\dots\dots\dots\dots (31)$$

The aggregate capacity $C_n$ of the $n$-th layer across all subchannels is given by Equation (32):

$$C_n = \sum_{k=1}^{N_c} C_{nk} \quad for \ \ n = 1,\dots,N \dots\dots\dots\dots\dots\dots\dots\dots\dots\dots\dots\dots\dots (32)$$

The detection order based on $C_n$ can be selected.
An operation for selecting a layer in which $C_n$ is maximized is identical to the one for retrieving a layer in which a metric value $M_n$ in Equation (33) is minimized:

$$M_n = \prod_{k=1}^{N_c} \left[\left((\rho/N)\overline{H}_k^* H_k + I_N\right)^{-1}\right]_{nn} \quad for \ n = 1,\dots,N \dots\dots\dots\dots\dots\dots\dots (33)$$

After the metrics $M_n$ for all layers are computed, the detection order among layers is determined in an ascending order of $M_n$. The detection order in the detection method in accordance with the present invention may be different in each step. Because a process for updating the order in every step is not useful for the overall performance improvement, the update is not performed to reduce complexity when the representative detection order is set in the first step. As illustrated in FIG 4, the representative detection order decision is performed in the representative detection order decision unit 440 before the signal detection unit 431. The layer order is set by a value of $M_n$. Accordingly, the signal detection and decoding method provides a standard metric for deciding an optimum layer order in a frequency selective MIMO-Orthogonal Frequency Division Multiple Access (OFDMA) environment.

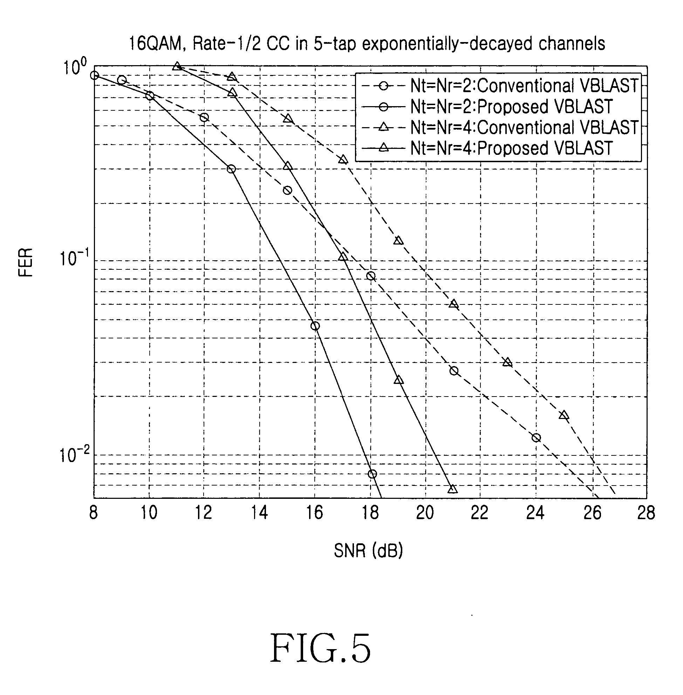

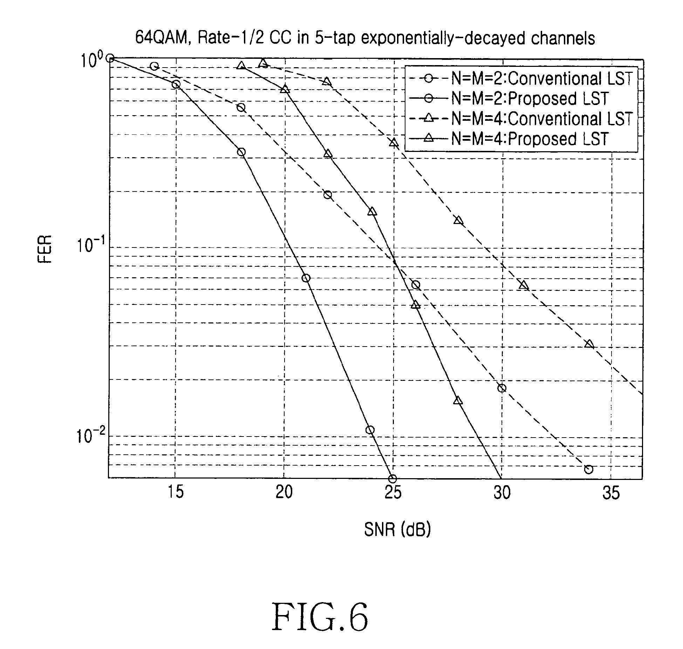

FIGs. 5 and 6 are illustrating performance comparison results in terms of a frame error between the signal detection and decoding method of the present invention and the conventional V-BLAST method when 16QAM and 64QAM are applied.

The number of transmit antennas and the number of receive antennas are 4, a Convolutional Code (CC) at a code rate ½ is used, an OFDM scheme defined in the Institute of Electrical and Electronics Engineers (IEEE) 802.11 a standard based on a 64-length FFT is used, and an OFDM symbol interval is 4 $\mu s$ including a guard interval of 0.8 $\mu s$. In the simulations, a 5-tap multipath channel with an exponentially decaying profile is used. It is assumed that the frame length is one OFDM symbol interval.

When 16QAM is applied as illustrated in FIG 5, signal detection and decoding methods of the present invention have gains of 5 dB and 7 dB as compared with the conventional V-BLAST and demapping method at a Frame Error Rate (FER) of 1 %. When the signal detection and decoding methods of the present invention are combined, a gain of 8 dB can be obtained. This performance gain can be extended for 64QAM as illustrated in FIG 6.

This improvement is obtained through soft bit metric generation and decision error consideration in an equalization process of the signal detection and decoding method in accordance with the present invention.

As described above, the signal detection and decoding method of the present invention can significantly improve system performance in a coded bit system using a new equalization matrix G considering a decision error.

It is expected that the signal detection and decoding method of the present invention can obtain various diversity gains associated with frequency, space, and time diversities with a successive interference-cancelling algorithm by introducing an optimum soft bit demapper.

Because the signal detection and decoding method of the present invention can improve system performance by correcting an equalization matrix, it is expected that the maximum system performance can be improved in a minimum increase in the complexity of a receiver.

While the present invention has been described with reference to the preferred embodiments thereof, it will be understood by those skilled in the art that various changes in form and detail may be made therein without departing from the scope of the present invention as defined by the following claims.

**Claims**

1. A method for detecting and decoding a signal in a communication system based on Multiple-Input Multiple-Output, MIMO-Orthogonal Frequency Division Multiplexing, OFDM, comprising the steps of:

   receiving a signal through multiple receive antennas;
   performing signal processing considering a decision error occurring at a symbol decision time and detecting a symbol from the received signal; and
   recovering original data transmitted from the detected symbol.

2. The method of claim 1, wherein the symbol is detected using a Minimum Mean Square Error, MMSE-based equalization matrix.

3. The method of claim 2, wherein the equalization matrix is expressed by:

$$G = H_i^*(H_iH_i^* + \frac{1}{\sigma_s^2}\hat{H}_{i-1}Q_{\hat{e}_{i-1}}\hat{H}_{i-1}^* + \alpha I_M)^{-1},$$

where $H_i$ is a channel matrix for an $i$-th signal, * is a complex conjugate, $e$ is an estimation error, $Q_e$ is a decision error covariance matrix of $e$,

$$\alpha = \frac{\sigma_n^2}{\sigma_s^2},$$

and $I$ is an identity matrix.

4. The method of claim 3, wherein the equalization matrix is designed such that a mean square value of the error $e = x_l - Gy_i$ is minimized.

5. The method of claim 3, wherein the decision error covariance matrix $Q_e$ is computed by:

$$Q_e = \begin{bmatrix} E[\|e_1\|^2|\hat{x}_1] & \cdots & E[e_1 e_{i-1}^*|\hat{x}_1, \hat{x}_{i-1}] \\ \vdots & \ddots & \vdots \\ E[e_{i-1} e_1^*|\hat{x}_{i-1}, \hat{x}_1] & \cdots & E[\|e_{i-1}\|^2|\hat{x}_{i-1}] \end{bmatrix},$$

where $E[e_m e_n^*|\hat{x}_m, \hat{x}_n]$ corresponding to a conditional expectation value indicates that errors $e_m$ and $e_n$ occur due to inaccurate decisions associated with $\hat{x}_m \neq x_m$ and $\hat{x}_n \neq \hat{x}_n$.

6. The method of claim 5, wherein diagonal elements $E[\|e_m\|^2|\hat{x}_m]$ of the decision error covariance matrix $Q_e$ indicate a mean square error value of the detected symbol.

7. The method of claim 5, wherein diagonal elements $E[\|e_m\|^2|\hat{x}_m]$ of the decision error covariance matrix $Q_e$ are values considering variance of a decision error $e_m$ due to an inaccurate decision associated with $\hat{x}_m$.

8. The method of claim 5, wherein a position of a component with a smallest value among diagonal elements of the decision error covariance matrix $Q_e$ determines a signal detection order.

9. The method of claim 5, wherein the step of detecting the symbol comprises:

computing a log likelihood ratio, LLR, value of a transmitted symbol $x$, mapped to a position $t$ in which a mean square error, MSE, is minimized in the decision error covariance matrix $Q_e$ ; and
setting a symbol mapped to the LLR value.

10. The method of claim 9, wherein the LLR value is computed by:

$$LLR(b_t^i) = \log \frac{\sum_{s \in S_0^i} \exp\left(-\frac{\|\tilde{x}_t - s\|^2}{\sigma_v^2}\right)}{\sum_{s \in S_1^i} \exp\left(-\frac{\|\tilde{x}_t - s\|^2}{\sigma_v^2}\right)},$$

where $b_t^i$ is an $i$-th bit of the transmitted symbol $x_t$, $S$ is a set of received symbols, $s$ is an element of the set $S$, $S_0^i$ is a subset of the set $S$ in which a value of the $i$-th bit is 0, $\sigma_v^2 = \sigma_w^2 / \|\beta\|^2$ is variance of remaining interference and noise $v$, and $\beta = g_t h_t$.

11. The method of claim 10, wherein the remaining interference and noise are computed by:

$$\sigma_w^2 = \sum_{\substack{j=i \\ j\neq i}}^{N} \left\| g_i h_j \right\|^2 E[\left\| x_j \right\|^2] + \sum_{j=1}^{i-1} \left\| g_i h_j \right\|^2 E[\left\| e_j \right\|^2 | \hat{x}_j] + E[g_i n n^\dagger g_i^\dagger]$$

$$= \sum_{\substack{j=i \\ j\neq i}}^{N} \left\| g_i h_j \right\|^2 \sigma_s^2 + \sum_{j=1}^{i-1} \left\| g_i h_j \right\|^2 E[\left\| e_j \right\|^2 | \hat{x}_j] + \sigma_n^2 \left\| g_i \right\|^2$$
,

where $g$, is a column of the equalization matrix $G$.

**12.** The method of one of claims 1 to 11, wherein the step of detecting the symbol comprises:

setting a detection order for layers in which signals are received through an identical subchannel.

**13.** The method of claim 12, wherein the detection order for the layers is set in descending order from a layer with a highest channel capacity.

**14.** The method of claim 13, wherein the channel capacity is computed by:

$$C_n = \sum_{k=1}^{N_c} C_{nk} \quad for \ \ n = 1,...,N,$$

where $C_{nk}$ is defined as the channel capacity for an $n$ -th layer in a $k$ -th subchannel, $C_{nk}$ being computed by $C_{nk} = \log_2(1 + SINR_{nk})$.

**15.** The method of claim 12, wherein the detection order is set in ascending order from a layer in which a metric $M_n$ for the $n$ -th layer is smallest.

**16.** The method of claim 15, wherein the metric $M_n$ is computed by:

$$M_n = \prod_{k=1}^{N_c} \left[ \left( (\rho/N) \overline{H}_k^* H_k + I_N \right)^{-1} \right]_{nn} \quad for \ n = 1,...,N,$$

where $H$ is a channel matrix, $p$ is a mean received power to noise ratio in each receive antenna, and $I$ is an identity matrix.

**17.** The method of claim 12, wherein the detection order is set only for one subchannel, the set detection order being equally applied to all subchannels.

**18.** An apparatus for detecting and decoding a signal in a communication system based on Multiple-Input Multiple-Output, MIMO-Orthogonal Frequency Division Multiplexing, OFDM, said apparatus comprising:

a receiver for receiving a signal through multiple receive antennas;
means for applying a signal model that considers a decision error occurring at a symbol decision time and detecting a symbol from the received signal; and
means for recovering original data transmitted from the detected symbol.

**19.** The apparatus of claim 18 being adapted to operate according to one of claims 1 to 17.

FIG.1

EP 1 705 822 A2

FIG.2

EP 1 705 822 A2

| | | | |
|---|---|---|---|
| $S_{C0}$ ● | $S_{E0}$ ● | $S_{E1}$ ● | $S_{C1}$ ● |
| $S_{E2}$ ● | $S_{I0}$ ● | $S_{I1}$ ● | $S_{E3}$ ● |
| $S_{E4}$ ● | $S_{I2}$ ● | $S_{I3}$ ● | $S_{E5}$ ● |
| $S_{C2}$ ● | $S_{E6}$ ● | $S_{E7}$ ● | $S_{C3}$ ● |

FIG.3

nTH LAYER

1ST LAYER

431        433                    435                    437                    439

LAYER
DETECTION
ORDER
DECISION
UNIT

SIGNAL
DETECTION
UNIT

1
2
o
o
o
o
Nc

P/S

DEMAPPER → DEINTERLEAVER → DECODER

440

LAYER
CANCELLER ← MAPPER ← INTERLEAVER ← ENCODER

447        445                                443                    441

FIG.4

16QAM, Rate-1/2 CC in 5-tap exponentially-decayed channels

Legend:
- Nt=Nr=2:Conventional VBLAST
- Nt=Nr=2:Proposed VBLAST
- Nt=Nr=4:Conventional VBLAST
- Nt=Nr=4:Proposed VBLAST

Y-axis: FER

X-axis: SNR (dB)

FIG.5

64QAM, Rate-1/2 CC in 5-tap exponentially-decayed channels

FIG.6